# FASCICULE DE BREVET EUROPEEN

(11) **EP 0 589 790 B1**
(45) Date de publication et mention de la délivrance du brevet: **18.12.1996**
(21) Numéro de dépôt: 93402320.1
(22) Date de dépôt: 22.09.1993
(51) Int. Cl.: B60J 7/043

(54) **Toit ouvrant entrebâillant et coulissant**
Schiebehebedach
Tilting and sliding sunroof

(30) Priorité: 24.09.1992 FR 9211395
(43) Date de publication de la demande: 30.03.1994
(73) Titulaire: WEBASTO HEULIEZ : Société à Responsabilité Limitée, F-85700 Les Châtelliers -Châteaumur (FR)
(72) Inventeur: Cheron, Christian, F-49000 Angers (FR); de Gaillard, Francois, F-85390 Mouilleron en Pareds (FR); Thierry, Pierre, F-49300 Cholet (FR)
(74) Mandataire: Keib, Gérard

(56) Documents cités:
- DE-A- 3 444 606
- DE-A- 3 515 321
- DE-A- 3 603 314
- DE-A- 4 001 759
- FR-A- 2 525 159

## Description

La présente invention a pour objet un toit ouvrant entrebâillant et coulissant et comportant un panneau mobile de part et d'autre duquel sont disposés un élément coulissant présentant un premier axe de rotation du panneau mobile, un rail, un chariot de guidage et un guide solidaire du panneau mobile, et dans lequel, de part et d'autre du panneau mobile, un dit élément coulissant est situé à une partie avant du panneau mobile et est déplaçable en translation par rapport audit rail, et un dit chariot de guidage présente des pions coopérant avec des chemins de guidage respectifs ménagés dans ledit guide, le chariot de guidage étant déplaçable en translation relativement audit rail pour entrebâiller le panneau mobile par rotation de celui-ci autour du premier axe, puis le faire coulisser par un mouvement du chariot de guidage vers l'arrière du panneau mobile et vice versa lors d'un retour du chariot de guidage vers l'avant du panneau mobile.

Un tel toit ouvrant est connu de la demande de brevet français FR-2 525 159 (WEBASTO WERKE). Dans celle-ci, les deux chariots de guidage sont mobiles uniquement en translation et le panneau mobile coopère avec deux leviers de relevage articulés en deux points, l'un situé au niveau du panneau mobile, et l'autre, au niveau du rail de guidage. Lorsque les chariots de transport sont déplacés vers l'avant à partir d'une position d'ouverture du panneau mobile, les leviers de relevage sont maintenus en place par un ressort s'opposant à un mouvement relatif entre ces deux éléments. Un tel dispositif nécessite, pour remplir les fonctions mécaniques, un grand nombre de pièces et en outre un encombrement vertical important, notamment en raison du nombre d'articulations requis.

La présente invention a pour objet un toit ouvrant entrebâillant et coulissant du type précité permettant de réaliser les fonctions avec un nombre de pièces réduit et également un encombrement vertical peu élevé.

Dans ce but, le toit ouvrant selon l'invention est caractérisé en ce qu'un dit chariot de guidage comporte un deuxième axe autour duquel il est mobile en rotation de telle sorte que l'entrebâillement du panneau mobile est obtenu par rotation du chariot de guidage autour du deuxième axe lors d'une translation du chariot de guidage vers l'arrière du panneau mobile et en ce qu'il comporte, au moins d'un côté du panneau mobile, un moyen pour empêcher la rotation du chariot de guidage lors dudit retour de celui-ci vers l'avant du panneau mobile.

Ledit moyen peut comporter, au moins d'un côté du panneau mobile, un élement de verrouillage commandé par le déplacement d'un dit chariot de guidage et présentant deux positions, à savoir une première position dans laquelle il bloque le coulissement du panneau mobile, et une deuxième position dans laquelle il bloque la rotation du chariot de guidage, et le passage entre la première et la deuxième position s'effectuant lors d'une translation du chariot de guidage vers l'arrière, sensiblement à la fin de la rotation du chariot de guidage pour entrebâiller le panneau mobile et le passage entre la deuxième et la première position s'effectue lors d'une translation du chariot de guidage en retour vers l'avant sensiblement en fin de course avant du panneau mobile.

Le chariot de guidage présente avantageusement un premier pion adjacent au deuxième axe, et un deuxième et un troisième pions espacés du deuxième axe, et le guide présente un premier, un deuxième et un troisième chemins de guidage, le premier pion coopérant avec le premier chemin de guidage incurvé de manière à provoquer la rotation du chariot de guidage, le deuxième et le troisième pions coopérant avec les deuxième et troisième chemins de guidage dont le profil est adapté à entrebâiller et à refermer le panneau mobile en conformité avec ladite rotation du chariot mobile, qui est produite par la translation du chariot mobile respectivement vers l'arrière et en retour, vers l'avant. Cette disposition permet une rotation du chariot de guidage par effet de levier, d'où une faible épaisseur du chariot.

Le troisième chemin de guidage est avantageusement superposé au deuxième chemin de guidage.

Selon un mode de réalisation préféré, le troisième chemin de guidage présente un bord inférieur qui s'étend vers l'avant sur une distance inférieure à son bord supérieur de telle sorte que le troisième pion est guide seulement par le bord supérieur pendant une partie de la course du chariot de guidage et/ou le premier chemin de guidage présente un bord inférieur qui s'étend vers l'arrière sur une distance inférieure à celle de son bord supérieur de telle sorte que le premier pion est guidé seulement par ledit bord supérieur pendant une partie de la course du chariot de guidage. Ceci permet de limiter l'encombrement vertical nécessité par le mécanisme et en particulier de loger celui-ci dans l'épaisseur d'un rail de guidage standard de toit ouvrant (par exemple 30 mm).

Selon une variante préférée de ce mode de réalisation préféré, le toit ouvrant est caractérisé en ce que, lorsque le panneau mobile est en position d'entrebâillement maximal, le premier pion est dégagé du premier chemin de guidage et est situé en-dessous d'un bord inférieur du guide.

L'élément de verrouillage peut être avantageusement un levier mobile en rotation autour du premier axe et comportant un quatrième chemin de guidage coopérant avec un ergot du chariot de guidage, l'ergot pouvant être solidaire du deuxième axe. Le quatrième chemin de guidage peut comporter une partie arrière incurvée vers le bas pour relever le levier et présentant un logement de manière à permettre un blocage de l'ergot pour empêcher la rotation du chariot de guidage en fixant l'entr'axe entre le premier et le deuxième axe.

Le quatrième chemin de guidage peut être agencé pour que, lorsque l'ergot est libéré de sa partie arrière, le levier soit logé dans une ouverture inférieure du rail de manière à empêcher toute translation du panneau mobile.

D'autres caractéristiques et avantages de l'invention apparaîtront mieux à la lecture de la description qui va suivre, donnée à titre d'exemple non limitatif, en liaison avec les dessins qui représentent :
- la figure 1, une vue de côté en coupe d'un toit ouvrant selon l'invention en position fermée,
- la figure 2, un détail d'un toit ouvrant selon l'invention représentant le levier de verrouillage en position de blocage du coulissement du panneau mobile,
- la figure 3, est une vue schématique illustrant le toit ouvrant en position entrebâillée avant coulissement,
- les figures 4a à 4d, des coupes transversales des figures 1 et 2 respectivement selon A-A, B-B, C-C et D-D.

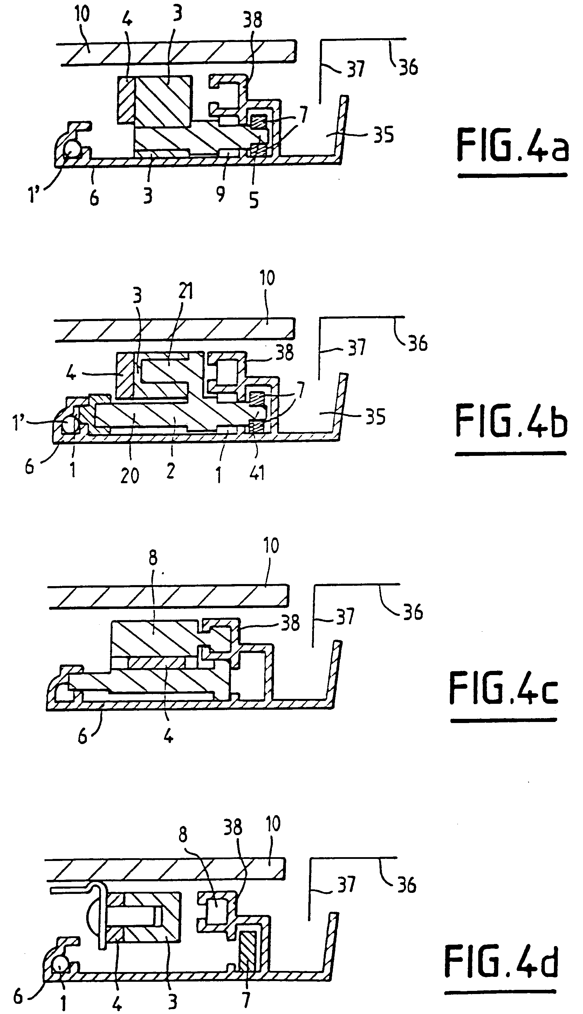

Selon les figures, un toit ouvrant, logé dans le pavillon 36 d'un véhicule comporte un panneau mobile 10 comportant sur son pourtour un profil d'étanchéité (référencé 11 à l'avant du panneau et 12 à l'arrière de celui-ci). Le panneau 10, par exemple en verre, est fixé sur une coulisse référencée 4 articulée sur son point avant par deux axes 5 situés de part et d'autre du panneau, chaque axe 5 étant lié à un chariot 9 (fig. 4a) coulissant dans un rail 6. La coulisse 4 est solidaire de deux guides 3, par exemple en matière plastique, disposés latéralement de part et d'autre du panneau mobile 10, et comportant trois pistes référencées 30 à 32. Les pistes 30 à 32 de chaque guide 3 coopérent avec des pions référencés 21 à 23 d'une biellette 2 formant un chariot de guidage. Chacun des deux chariots de guidage 2 est entraîné par un mécanisme 1 présentant un câble à crémaillère 1' lui-même entraîné, de manière connue en soi, par un pignon non représenté. Le câble 1' est logé dans le profilé constituant le rail 6 (voir fig. 4a à 4d). L'ensemble des mouvements du toit ouvrant sont commandés à partir des mouvements communiqués aux chariots de guidage 2 par le déplacement du mécanisme à crémaillère 1. Chacun des chariots de guidage 2 comporte un axe de rotation 20 logé dans une partie centrale du profilé 6 de manière à permettre une rotation de la pièce 2 quelle que soit sa position le long du rail 6. Le pion 21, est situé à proximité immédiate de l'axe de rotation 20, et en particulier situé au-dessus de celui-ci lorsque le panneau 10 est en position fermée. Il est logé dans un chemin de guidage 32 du guide 3. Le chemin de guidage 32 est incurvé vers le bas de manière à produire un mouvement de relevage du panneau 10 par rotation du chariot de guidage 2 déplacé vers l'arrière du pavillon 36. Les pions 22, 23 sont superposés à une partie arrière du chariot de guidage 2, le pion supérieur 22 coulissant dans un chemin de guidage 31 sensiblement parallèle au rail 6 et le pion inférieur 23 coulissant dans un chemin de guidage 30 dont la partie avant est légèrement incurvée vers le bas de manière à rejoindre le chemin de guidage 32 qu'il prolonge.

On remarquera également que le rail 6 présente une gouttière latérale 35 débordant sur le pourtour 37 de l'ouverture du pavillon 36 et qu'il peut présenter également une région profilée 38 destinée à recevoir, de manière connue en soi, un élément de maintien 8 du panneau 10 en position fermée, cet élément coulissant 8 s'étendant sur pratiquement toute la longueur du toit ouvrant.

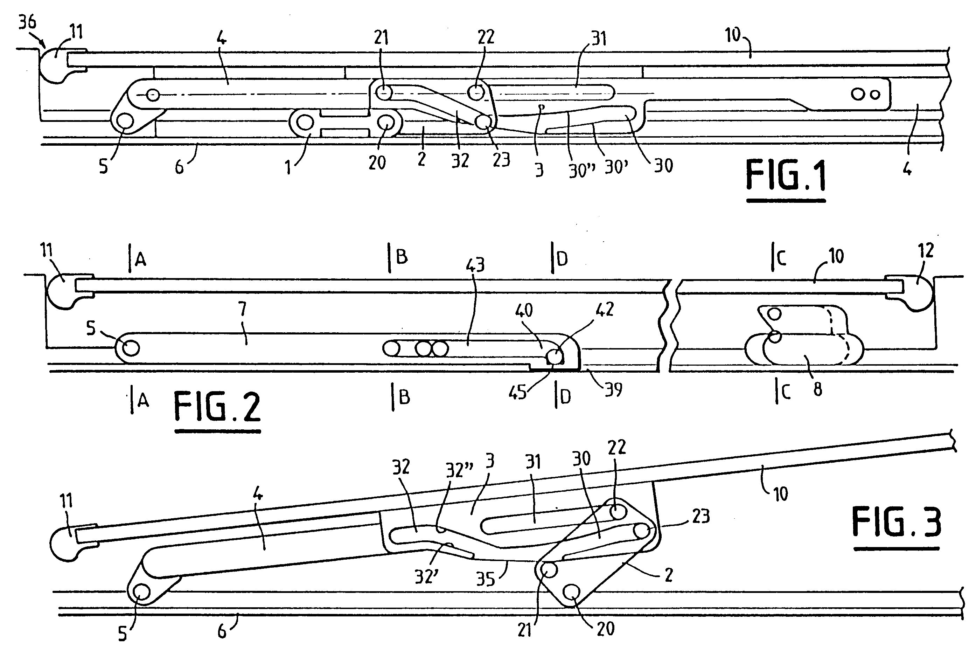

Enfin, un levier 7 (voir figure 2), qui repose dans une encoche 39 à la partie inférieure du rail 6 lorsque le panneau est fermé, présente un chemin de guidage 40 coopérant avec un prolongement 41 de l'axe 20, le chemin de guidage 40 présentant une partie arrière 42 incurvée vers le bas se terminant par un logement 45, de manière à permettre un relèvement du levier 7 en dehors de l'encoche 39 lorsque le chariot de guidage 2 a terminé son pivotement. En position relevée, le prolongement 41 est bloqué dans le logement 45, de manière à empêcher la rotation inverse du chariot de guidage 2 correspondant lorsqu'il est rappelé vers l'avant par le système à cable 1. Un seul levier 7 peut être mis en oeuvre, ou bien de préférence un levier 7 est disposé de chaque côté du panneau mobile 10.

Le fonctionnement du dispositif est alors le suivant : Dans la position où le panneau est fermé représenté à la figure 1, et pour chacun des chariots 2, les pions 21 et 22 sont situés en butée à la partie avant des rainures respectivement 32 et 31, et le pion 23 est situé à la partie avant du chemin de guidage 30. Par actionnement du mécanisme à câble 1, les chariots de guidage 2 sont translatés vers l'arrière et les pions 22 et 23 coulissent le long des chemins de guidage 31 et 30 alors que le pion 21 de chaque chariot 2 coulisse vers l'arrière du chemin de guidage 32 provoquant ainsi la rotation des chariots de guidage 2 de manière à relever le panneau mobile 10 par rotation de celui-ci autour de ses deux axes 5. Pendant cette phase de rotation, toute translation du panneau mobile 10 est empêchée par verrouillage du levier 7, dans l'encoche 39 du rail 6. En fin de rotation des chariots de guidage 2, le (ou les) levier(s) 7 est (sont) libéré(s) de l'encoche 39 par coopération entre le doigt 41 et le chemin de guidage incurvé dans sa partie 42, et le levier 7 se relève par rotation autour de l'axe 5 de manière à bloquer la contre-rotation des chariots 2. Ce blocage est obtenu par le fait que le chemin de guidage 40 présente, à la partie inférieure de sa région incurvée 42, le logement 45 qui retient le pion 41, ce qui fixe la valeur de l'entr'axe entre les axes 5 et 20. Lorsque l'action du système d'entraînement 1 vers l'arrière du pavillon 36 se poursuit, le panneau mobile 10 est entrainé en translation tout en restant entrebâillé, jusqu'à ce qu'il arrive à une butée arrière. Le panneau mobile 10 est alors ouvert entrebaillé au-dessus du pavillon 36 du véhicule.

Lors d'un retour vers l'avant provoqué par le mécanisme 1 en vue d'une fermeture du panneau mobile 10, les chariots de guidage 2 sont entraînés uniquement en translation étant donné que leur mouvement de rotation est empêché ainsi qu'il a été dit ci-dessus par le levier 7. Ceci se poursuit jusqu'à ce que le panneau mobile 10 vienne en position de butée avant (11). A ce moment là, la force d'actionnement des chariots de guidage 2 par le mécanisme 1, permet que le doigt 41 se dégage du logement 45 et coulisse le long de la partie incurvée 42, puis de la partie rectiligne 43 de la fente 40, de telle sorte que le levier 7 retombe dans la fente 39 du rail 6, ce qui empêche maintenant toute translation ultérieure du panneau mobile 10 ainsi qu'il a été expliqué ci-dessus. La poursuite du mouvement de chariot de guidage 2 vers l'avant du pavillon 36 entraîne maintenant la rotation du chariot 2 dans le sens inverse de manière à permettre la fermeture du panneau mobile 10, d'où retour à la situation de la figure 1.

On remarquera que les fentes 32 et 30 situées à la partie inférieure du guide 3 ne présentent pas de bord inférieur pour la fin de la course du pion 21 et au début de la course du pion 23. Ceci permet de diminuer la hauteur du guide 3 de manière à le loger dans le rail 6, et éventuellement, ainsi qu'il est représenté à la figure 3, de permettre au pion 21 de se dégager en-dessous de la partie inférieure du guide 3, lorsque le chariot de guidage 2 est en position d'entrebâillement maximal du panneau mobile 10. On obtient ainsi une hauteur minimale pour le guide 3.

## Revendications

1. Toit ouvrant entrebâillant et coulissant et comportant un panneau mobile (10) de part et d'autre duquel sont disposés un élément coulissant présentant un premier axe de rotation (5) du panneau mobile, un rail (6), un chariot de guidage (2) et un guide (3) solidaire du panneau mobile (10), et dans lequel, de part et d'autre du panneau mobile, un dit élément coulissant est situé à une partie avant du panneau mobile et est déplaçable en translation par rapport audit rail (6), et un dit chariot de guidage (2) présente des pions (21, 22, 23) coopérant avec des chemins de guidage (32, 31, 30) respectifs ménagés dans le guide (3), le chariot de guidage (2) étant déplaçable en translation relativement audit rail (6) pour entrebâiller le panneau mobile (10) par rotation de celui-ci autour du premier axe (5) puis le faire coulisser lors d'un mouvement du chariot de guidage (2) vers l'arrière, et vice-versa lors d'un retour du chariot de guidage (2) vers l'avant,
caractérisé en ce qu'
un dit chariot de guidage (2) comporte un deuxième axe (20) autour duquel il est mobile en rotation de telle sorte que l'entrebâillement du panneau mobile (10) est obtenu par rotation dudit chariot de guidage (2) autour du deuxième axe (20) lors d'une translation du chariot de guidage (2) vers l'arrière du panneau mobile (10) et en ce qu'il comporte, au moins d'un côté du panneau mobile un moyen (7) pour empêcher la rotation du chariot de guidage (2) lors dudit retour de celui-ci vers l'avant.

2. Toit ouvrant selon la revendication 1, caractérisé en ce que ledit moyen comporte au moins d'un côté du panneau mobile, un élément de verrouillage (7) commandé par le déplacement d'un dit chariot de guidage (2) et présentant deux positions, à savoir une première position dans laquelle il bloque le coulissement du panneau mobile (10) et une deuxième position dans laquelle il bloque la rotation du chariot de guidage (2), le passage entre la première et la deuxième position s'effectuant, lors d'une translation du chariot de guidage (2) vers l'arrière, sensiblement à la fin de la rotation du chariot de guidage (2) pour entrebâiller le panneau mobile (10) et le passage entre la deuxième et la première position s'effectuant lors d'une translation du chariot de guidage (2) vers l'avant sensiblement en fin de course avant du panneau mobile (10).

3. Toit ouvrant selon une des revendications 1 ou 2, caractérisé en ce qu'un chariot de guidage (2) présente un premier pion (21) adjacent au deuxième axe (20), et un deuxième (22) et un troisième (23) pions espacés du deuxième axe, en ce que le guide (3) présente un premier (32) , un deuxième (31) et un troisième (30) chemins de guidage, le premier pion coopérant avec le premier chemin de guidage (32) incurvé de manière à provoquer ladite rotation dudit chariot de guidage (2), les deuxième (22) et troisième (23) pions coopérant avec les deuxième (31) et troisième (30) chemins de guidage dont le profil est adapté pour entrebâiller et refermer le panneau mobile (10) en conformité avec ladite rotation du chariot de guidage (2).

4. Toit ouvrant selon la revendication 3, caractérisé en ce que le deuxième chemin de guidage (31) est superposé au troisième chemin de guidage (30).

5. Toit ouvrant selon la revendication 4, caractérisé en ce que le troisième (30) chemin de guidage présente un bord inférieur (30') qui s'étend vers l'avant sur une distance inférieure à son bord supérieur (30'') de telle sorte que le troisième pion (23) est guidée seulement par le bord supérieur (30'') pendant une partie de la course du chariot de guidage (2).

6. Toit ouvrant selon une des revendications 3 à 5, caractérisé en ce que le premier chemin de guidage (32) présente un bord inférieur (32') qui s'étend vers l'arrière sur une distance inférieure à celle de son bord supérieur (32'') de telle sorte que le premier pion (21) est guidé seulement par ledit bord supérieur (32'') pendant une partie de la course du chariot de guidage (2).

7. Toit ouvrant selon la revendication 6, caractérisé en ce que, lorsque le panneau mobile (10) est en position d'entrebâillement maximal, le premier pion (21) est dégagé du premier chemin de guidage (32) et est situé en-dessous d'un bord inférieur (35) du guide (3).

8. Toit ouvrant selon une des revendications précédentes, caractérisé en ce que l'élément de verrouillage est un levier (7) mobile en rotation autour du premier axe (5) et en ce qu'il comporte un quatrième chemin de guidage (40) coopérant avec un ergot (41) du chariot de guidage (2).

9. Toit ouvrant selon la revendication 8, caractérisé en ce que le quatrième chemin de guidage (40) présente une partie arrière (42) incurvée vers le bas pour relever le levier (7) et présentant un logement (45) de manière à permettre un blocage de l'ergot (41) pour empêcher la rotation du chariot de guidage (2) en fixant l'entr'axe entre le premier (5) et le deuxième (20) axe.

10. Toit ouvrant selon la revendication 9, caractérisé en ce que le quatrième chemin de guidage (40) est agencé pour que, lorsque l'ergot (41) est libéré de sa partie arrière (42), le levier (7) soit logé dans une ouverture inférieure (39) du rail (6) de manière à empêcher toute translation du panneau mobile (10).

11. Toit ouvrant selon une des revendications 8 à 10, caractérisé en ce que l'ergot (41) est solidaire du deuxième axe (20).

## Claims

1. Half-opening sliding roof comprising a movable panel (10), on either side of which a sliding element is disposed which provides a first axis of rotation (5) for the movable panel, a rail (6), a guide carriage (2) and a guide means (3) integral to the movable panel (10), and wherein, on either side of the movable panel, a sliding element is located on a portion in front of the movable panel and may be displaced back and forth in relation to said rail (6) and a guide carriage (2) having lugs (21, 22, 23) cooperating with the respective guide paths (30, 31, 32) arranged in the guide means (3), the guide carriage (2) being displaceable back and forth relative to said rail (6) for half opening the movable panel (10) by rotating it around the first axis (5), then causing it to slide on forward movement of the guide carriage (2) and vice versa on the return movement of the guide carriage (2) to the rear, characterised in that said guide carriage (2) has a second axis (20) around which it may rotate so that the movable panel (10) is half opened by rotating said guide carriage (2) around the second axis (20) on displacement back and forth of the guide carriage (2) towards the front of the movable panel (10), and that on at least one side of the movable panel it has a means (7) for preventing rotation of the guide carriage (2) on its return to the rear.

2. Opening roof according to Claim 1, characterised in that on at least one side of the movable panel, said means comprises a locking element (7) controlled by the displacement of said guide carriage (2) and having two positions, i.e. a first position in which it blocks the sliding movement of the movable panel (10) and a second position in which it blocks the rotation of the guide carriage (2), passage between the first position and the second position being carried out, on displacement back and forth of the guide carriage (2), essentially at the end of the rotation of the guide carriage (2) for half opening the movable panel (10), and passage between the second position and the first position being carried out, on displacement of the guide carriage (2) towards the front, essentially at the end of the forward movement of the movable panel (10).

3. Opening roof according to one of Claims 1 or 2, characterised in that a guide carriage (2) has a first lug (21) adjacent to the second axis (20), and a second (22) and third lug (23) spaced from the second axis; that the guide means (3) has a first (32), second (31) and third (30) guide path, and said first lug cooperates with the first guide path (32), which is curved so as to initiate the rotation of said guide carriage (2), and said second (22) and third (23) lugs cooperate with the second (31) and third (30) guide paths, the profile of which is adapted to half open and close the movable panel (10) again in conformity with said rotation of the guide carriage (2).

4. Opening roof according to Claim 3, characterised in that the second guide path (31) is superposed on the third guide path (30).

5. Opening roof according to Claim 4, characterised in that the third guide path (30) has a lower edge (30') which extends towards the front to a shorter distance than its upper edge (30''), so that the third lug (23) is guided solely by the upper edge (30'') during part of the movement of the guide carriage (2).

6. Opening roof according to one of Claims 3 to 5, characterised in that the first guide path (32) has a lower edge (32') extending towards the rear to a shorter distance than its upper edge (32''), so that the first lug (21) is guided solely by said upper edge (32'') during part of the movement of the guide carriage (2).

7. Opening roof according to Claim 6, characterised in that, when the movable panel (10) is in the maximum half open position, the first lug (21) is disengaged from the first guide path (32) and is located below a lower edge (35) of the guide means (3).

8. Opening roof according to one of the preceding claims, characterised in that the locking element is a lever (7) which may be rotated around the first axis (5); and that it comprises a fourth guide path (40) cooperating with a protrusion (41) of the guide carriage (2).

9. Opening roof according to Claim 8, characterised in that the fourth guide path (40) has a front portion (42), which is curved downwards to raise the lever (7) and has a housing (45) to allow the protrusion (41) to be blocked in order to prevent rotation of the guide carriage (2) by fixing the distance between centres of the first (5) and second (20) axes.

10. Opening roof according to Claim 9, characterised in that the fourth guide path (40) is designed so that when the protrusion (41) is released from its front portion (42), the lever (7) is housed in a lower opening (39) of the rail (6) so as to prevent any displacement of the movable panel (10).

11. Opening roof according to one of Claims 8 to 10, characterised in that protrusion (41) is integral to the second axis (20).

## Patentansprüche

1. Sich hebendes und gleitendes Schiebedach mit einer beweglichen Platte (10), beidseits derer ein gleitendes Element, das eine erste Drehungsachse (5) der beweglichen Platte aufweist, eine Schiene (6), ein Führungsschlitten (2) und eine Führung (3), die einstückig mit der beweglichen Platte (10) ausgebildet ist, angeordnet sind, und bei dem beidseits der beweglichen Platte ein gleitendes Element an einem vorderen Teil der beweglichen Platte angeordnet und bezüglich der Schiene (6) in Translation verschiebbar ist, und wobei ein Führungsschlitten (2) Nockenstifte (21, 22, 23) aufweist, die mit den jeweiligen Führungswegen (30, 31, 32), die in der Führung (3) angebracht sind, zusammenwirken, wobei der Führungsschlitten (2) bezüglich der Schiene (6) in Translation verschiebbar ist, um die bewegliche Platte (10) durch Drehung dieser um die erste Achse (5) anzuheben, sie dann während einer Bewegung des Führungsschlittens (2) nach hinten gleiten zu lassen, und umgekehrt während einer Rückkehr des Führungsschlittens (2) nach vorne,
dadurch gekennzeichnet, daß
ein Führungsschlitten (2) eine zweite Achse (20) aufweist, um die er derart in Drehung beweglich ist, daß die Hebung der beweglichen Platte (10) durch Drehung des Führungsschlittens (2) um die zweite Achse (20) während einer Translation des Führungsschlittens (2) nach hinten von der beweglichen Platte (10) erhalten wird, und daß er zumindest auf einer Seite der beweglichen Platte eine Einrichtung (7) aufweist, um die Drehung des Führungsschlittens (2) während dessen Rückkehr nach vorne zu verhindern.

2. Schiebedach gemäß Anspruch 1, dadurch gekennzeichnet, daß die Einrichtung zumindest auf einer Seite der beweglichen Platte ein Verriegelungselement (7) aufweist, das von der Verschiebung eines Führungsschlittens (2) gesteuert wird, und das zwei Positionen aufweist, nämlich eine erste Position, in der es das Gleiten der beweglichen Platte (10) blockiert und eine zweite Position, in der es die Drehung des Führungsschlittens (2) blockiert, wobei der Übergang von der ersten in die zweite Position während einer Translation des Führungsschlittens (2) nach hinten, praktisch am Ende der Drehung des Führungsschlittens (2), um die bewegliche Platte (10) anzuheben, durchgeführt wird, und der Übergang von der zweiten in die erste Position während einer Translation des Führungsschlittens (2) nach vorne, praktisch am Ende des Vorwärtslaufes der beweglichen Platte (10) durchgeführt wird.

3. Schiebedach gemäß einem der Ansprüche 1 oder 2, dadurch gekennzeichnet, daß ein Führungsschlitten (2) einen ersten Nockenstift (21), der an die zweite Achse (20) anstößt, und einen zweiten (22) und einen dritten (23) Nockenstift aufweist, die mit räumlichem Abstand von der zweiten Achse angeordnet sind, und daß die Führung (3) einen ersten (32), einen zweiten (31) und einen dritten (30) Führungsweg aufweist, wobei der erste Nockenstift mit dem ersten Führungsweg (32) zusammenwirkt, der derart gebogen ist, daß er die Drehung des Führungsschlittens (2) bewirkt, wobei der zweite (22) und der dritte (23) Nockenstift mit dem zweiten (31) und dem dritten (30) Führungsweg zusammenwirken, deren Profil dafür eingerichtet ist, die bewegliche Platte (10) in Übereinstimmung mit der Drehung des Führungsschlittens (2) anzuheben und wieder zu schließen.

4. Schiebedach gemäß Anspruch 3, dadurch gekennzeichnet, daß der zweite Führungsweg (31) über den dritten Führungsweg (30) gelegt ist.

5. Schiebedach gemäß Anspruch 4, dadurch gekennzeichnet, daß der dritte (30) Führungsweg eine untere Kante (30') aufweist, die sich nach vorne über einen geringeren Abstand als seine obere Kante (30'') derart erstreckt, daß der dritte Nockenstift (23) nur von der oberen Kante (30'') während eines Teils des Laufes des Führungsschlittens (2) geführt wird.

6. Schiebedach gemäß einem der Ansprüche 3 bis 5, dadurch gekennzeichnet, daß der erste Führungsweg (32) eine untere Kante (32') aufweist, die sich nach hinten über einen geringeren Abstand als seine obere Kante (32'') derart erstreckt, daß der erste Nockenstift (21) nur von der oberen Kante (32'') während eines Teils des Laufes des Führungsschlittens (2) geführt wird.

7. Schiebedach gemäß Anspruch 6, dadurch gekennzeichnet, daß während die bewegliche Platte (10) sich in maximaler Hebeposition befindet, der erste Nockenstift (21) von dem ersten Führungsweg (32) freigegeben und unterhalb einer unteren Kante (35) der Führung (3) angeordnet wird.

8. Schiebedach gemäß einem der vorherigen Ansprüche, dadurch gekennzeichnet, daß das Verriegelungselement ein Hebel (7) ist, der in Drehung beweglich um die erste Achse (5) ist, und daß es einen vierten Führungsweg (40) aufweist, der mit einem Stift (41) des Führungsschlittens (2) zusammenwirkt.

9. Schiebedach gemäß Anspruch 8, dadurch gekennzeichnet, daß der vierte Führungsweg (40) einen hinteren Teil (42) aufweist, der nach unten gebogen ist, um den Hebel (7) hochzuheben, und der eine Aussparung (45) derart aufweist, daß eine Blockierung des Stiftes (41) ermöglicht wird, um die Drehung des Führungsschlittens (2) zu verhindern, indem die Zwischenachse zwischen der ersten (5) und der zweiten Achse (20) fixiert wird.

10. Schiebedach gemäß Anspruch 9, dadurch gekennzeichnet, daß der vierte Führungsweg (40) angeordnet ist, damit, während der Stift (41) aus seinem hinteren Teil (42) befreit wird, der Hebel (7) in einer unteren Öffnung (39) der Schiene (6) derart angeordnet wird, daß jede Translation der beweglichen Platte (10) verhindert wird.

11. Schiebedach gemäß einem der Ansprüche 8 bis 10, dadurch gekennzeichnet, daß der Stift (41) einstückig mit der zweiten Achse (20) ausgebildet ist.
